# EUROPEAN PATENT APPLICATION

(11) **EP 1 510 937 A1**
(43) Date of publication of application: **02.03.2005**
(21) Application number: 03077697.5
(22) Date of filing: 29.08.2003
(51) Int. Cl.: G06F 17/30

(54) **A method of providing a visualisation graph on a computer and a computer for providing a visualisation graph**

(71) Applicant: SAP AG, 69190 Walldorf (DE)
(72) Inventor: Beringer, Joerg, 60431 Frankfurt (DE); Werner, Horst, 69242 Rettigheim (DE); Hatscher, Michael, 49080 Osnabrück (DE)
(74) Representative: Prins, Adrianus Willem, Mr. Ir.

(57) **Abstract**

The invention relates to a method of providing a visualisation graph on a computer. The method comprises the steps of: storing data corresponding to a plurality of entities having a particular type, wherein an ontology includes said entities and wherein said entities are linked to each other by a plurality of relations, storing said ontology and said relations, in response to a query with respect to an entity selected from said plurality of entities, providing a visualisation graph representing the results of said query, and providing attractors which attract said entities to a predetermined sector of the graph depending on their entity type.

## Description

### Technical Field

The invention relates to a method of providing a visualisation graph on a computer and a computer for providing a visualisation graph.

### Background to the Invention and Prior Art

Visualisation graphs are tools which allow data to be handled and displayed on a display device according to certain criteria, and are known for example from www.touchgraph.com. The primary objective of navigation graphs is to display systems of complex interrelationships between entities, e.g. in a database or the world wide web. Visualisation graphs can be based on an ontology including all entity types occurring, where the considered entities are linked to each other by various kinds of relations. A visualization graph represents entities as boxes, often referred to as "nodes" of the graph, and relations as lines between the boxes. A common way of solving the problem of graphical layout is applying a physical simulation where all entities are treated as masses repulsing each other and the relations are treated as elastic lines trying to pull connected entities together. By double-clicking on a box, other entities which are directly related to the corresponding entity (but which may not yet in the graph) and their relations to other entities in the graph are included. In some implementations the double-clicked entity then moves to the center of the graph (it becomes the "focus" entity) and other nodes, which are too distant (measured in number of relations on the shortest path) from it may be removed from the graph..
It has been found that conventional visualisation graphs suffer drawbacks. One problem with conventional visualisation graphs using a non-deterministic approach is that entities are arranged in a random way because the basic algorithm results in one of many possible configurations representing a local energy minimum. Thus, the orientation within the graph is not optimal.

A further problem with conventional visualisation graphs is that when the number of entities becomes large, the display becomes crowded. This leads to an inefficient use of the display. Also, it becomes more difficult for the user to access information easily.
A further problem with conventional visualisation graphs is that when changes in the graphs are initiated, for example, when a node is double clicked on in order to include further entities related to that node into the graph, conventional repulsion based simulation approaches (which are indeterministic), a problem arises in making room for the entities of the group. In particular, if a node placed close to a second node is "exploded", the repulsion between the entities is so great that the system takes an unacceptable duration to converge. Thus, the user is faced with a graph that is slow to navigate with.
A further problem with conventional visualisation graphs is that the user has access only to information concerning directly related entities. This is limiting in terms of the information the user can acquire from the system.

It is an object of the present invention to address those problems encountered in conventional visualisation graphs.
In particular, it is an object of the present invention to visualize complex interrelationships, for example in a semantic net, in a graph, in a flexible way, allowing the display to be used in an efficient manner.

### Summary of the Invention

According to a first aspect of the invention, there is provided a method of providing a visualisation graph on a computer comprising the steps of:
storing data corresponding to a plurality of entities having a particular type, wherein an ontology includes said entities and wherein said entities are linked to each other by a plurality of relations,
in response to a query with respect to an entity selected from said plurality of entities, providing a visualisation graph representing the results of said query,
characterised by:
providing attractors which attract said entities to a predetermined sector of the graph depending on their entity type.
   By, the introduction of attractors which pull entities to certain sectors of the screen depending on their entity type (thus the name "360° Navigation Graph"), the location of each entity can be predicted without having to carry out a complete, and thus, very complex deterministic approach.

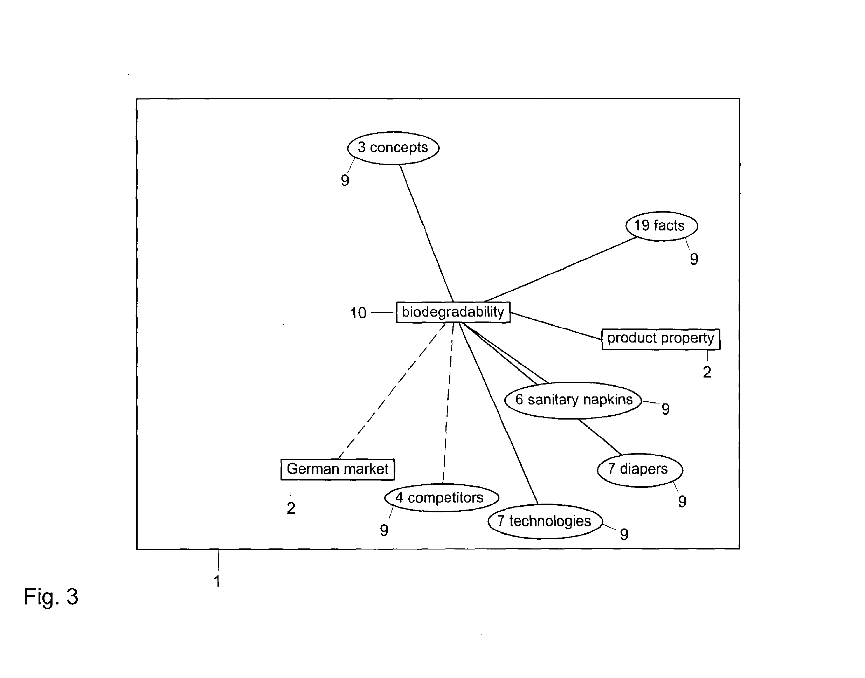

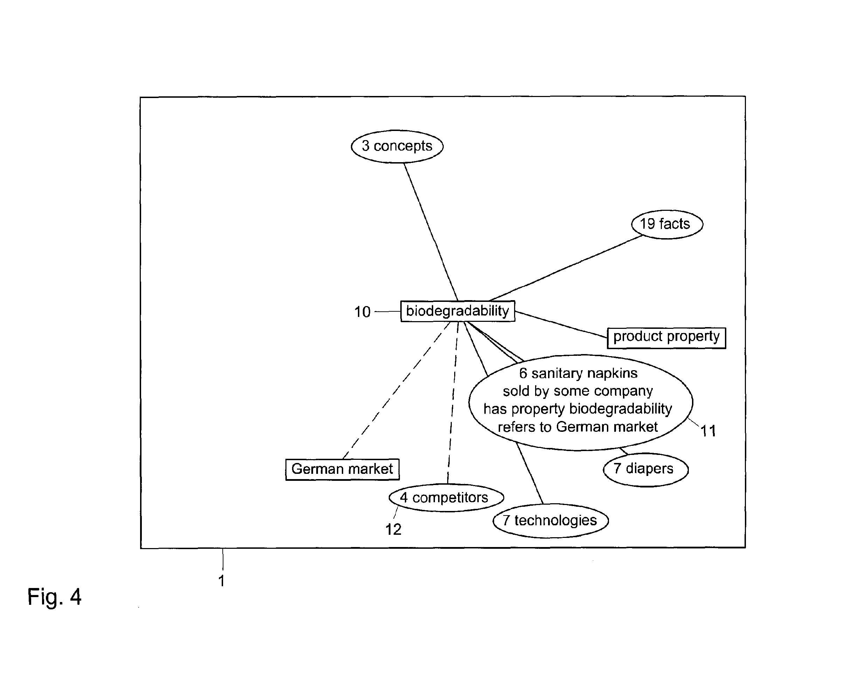

According to a second aspect of the invention, there is provided a method of providing a visualisation graph on a computer comprising the steps of:
storing data corresponding to a plurality of entities, wherein an ontology includes said entities and wherein said entities are linked to each other by a plurality of relations,
in response to a query with respect to an entity selected from said plurality of entities, providing a visualisation graph representing the results of said query,
characterised by:
selecting those entities from said plurality of entities having a common relation and storing said selected entities as a plurality of groups, representing said groups on said graph as a plurality of nodes, and representing only those relations which all of said nodes have in common.
   By grouping of entities with common relations and display of the group as one node (represented as an ellipse rather than a box in Figures 3 and 4) in the graph, and by providing lines representing only the relations that all nodes in the graph have in common, an efficient representation of the entities and an efficient use of the graph is achieved. Further, characteristics are used to identify common relations in such a way that a good distribution of nodes is achieved.

In a preferred embodiment, said selecting step includes abstracting said relations to find said common relation. By abstracting said relations, characteristics are used to identify common relations in such a way that an even distribution of nodes in the graph is achieved.

According to a third aspect of the invention, there is provided a method of providing a visualisation graph on a computer comprising the steps of:
storing data corresponding to a plurality of entities, wherein an ontology includes said entities and wherein said entities are linked to each other by a plurality of relations,
in response to a query with respect to an entity selected from said plurality of entities, providing a visualisation graph representing the results of said query,
characterised by:
representing a plurality of entities having a common relation as a first node on said visualisation graph, and in response to a first predetermined stimulus causing said entities comprised at said node to be displayed, and in response to a further predetermined stimulus causing said graph to restructure so that said entities displayed are replaced by said node.
   By, providing the possibility to explode such groups (i.e. to display all group entities as separate nodes in the graph) by double-clicking and to put them back into the group again, links between nodes representing relations are kept to a minimum which optimises the energy in the graph. Further, it becomes easier for the user to orientate within the graph, thus, improving his navigation of the information represented in the graph.

In a preferred embodiment, in response to said first predetermined stimulus, said node remains in said graph to represent said common relation. As a result even in the "exploded" state, the "group node" is kept in the graph and represents the common relations, while the single group members (entities) have a link to the group node.

In a further preferred embodiment, said entities are linked to a further entity or node via a link which represents a relation which may not be common to all entities linked to said first node.
By providing in addition, links which may not be common to all members of the group (linked by a common relation to said first node), the user has access to further navigable information.

According to a fourth aspect of the invention, there is provided a method of providing a visualisation graph on a computer comprising the steps of:
storing data corresponding to a plurality of entities, wherein an ontology includes said entities and wherein said entities are linked to each other by a plurality of relations,
in response to a query representing a predetermined context corresponding to an entity selected from said plurality of entities, providing a visualisation graph representing the results of said query, wherein the focus of said graph represents said context;
characterised by:
displaying entities which are indirectly related to said focus based on said context and at least one predetermined user preference.
   By providing the possibility to display entities which are indirectly related to the "focus" entity based on the current context and user preferences, the user is able to collect additional information even if there is no direct relationship between entities. Thus, allowing the user to "jump" from context to context within the graph. The present invention allows a user to find how large amounts of data are related. The user is able to navigate and explore knowledge domains in a visual way.

According to a fifth aspect of the invention, there is provided a computer for providing a visualisation graph, said computer comprising:
a database for storing data corresponding to a plurality of entities having a particular type, wherein an ontology includes said entities and wherein said entities are linked to each other by a plurality of relations,
a query interface adapted, so that in response to a query with respect to an entity selected from said plurality of entities, a visualisation graph is provided representing the results of said query,
characterised by:
a plurality of attractor codes processable to attract said entities to a predetermined sector of the graph depending on their entity type.

According to a sixth aspect of the present invention, there is provided a computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query with respect to an entity selected from said plurality of entities, a visualisation graph is provided representing the results of said query,
characterised by:
selection code processable to select those entities from said plurality of entities having a common relation and storing said selected entities as a plurality of groups,
representation code processable to represent said groups on said graph as a plurality of nodes, wherein only those relations which all of said nodes have in common are represented.

According to a seventh aspect of the present invention, there is provided a computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query with respect to an entity selected from said plurality of entities, a visualisation graph is provided representing the results of said query,
characterised by:
representation code processable to represent a plurality of entities having a common relation as a node on said visualisation graph, and in response to a predetermined stimulus causing said entities comprised at said node to be displayed, and in response to a further predetermined stimulus causing said graph to restructure so that said entities displayed are replaced by said node.

According to an eighth aspect of the present invention, there is provided a computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query representing a predetermined context corresponding to an entity selected from said plurality of entities, a visualisation graph is provided representing the results of said query, wherein the focus of said graph represents said context;
characterised by:
display code processable to display entities which are indirectly related to said focus based on said context and at least one predetermined user preference.

According to a ninth aspect of the present invention, there is provided a program storage device readable by a processing apparatus, said device embodying a program of instructions executable by the processor to perform the steps of the methods of any one of the first to fifth aspects of the present invention.

### Brief description of the drawings

In order that the invention may be more fully understood embodiments thereof with now be described by way of example only, with reference to the figures in which:
Figure 1 shows details of a visualisation graph according to an embodiment of a first aspect of the present invention;
Figure 2 shows further details of the visualisation graph shown in Figure 1;
Figure 3 shows a visualisation graph according to an embodiment of a second aspect of the present invention;
Figure 4 shows further details of the visualisation graph shown in Figure 3;
Figures 5-8 show visualisation graphs according to embodiments of a third aspect of the present invention; and
Figure 9 shows a typical computer for carrying out the methods according to embodiments of the invention.

### Description of the Preferred embodiments

### 1. Graph Sectors and Attractors

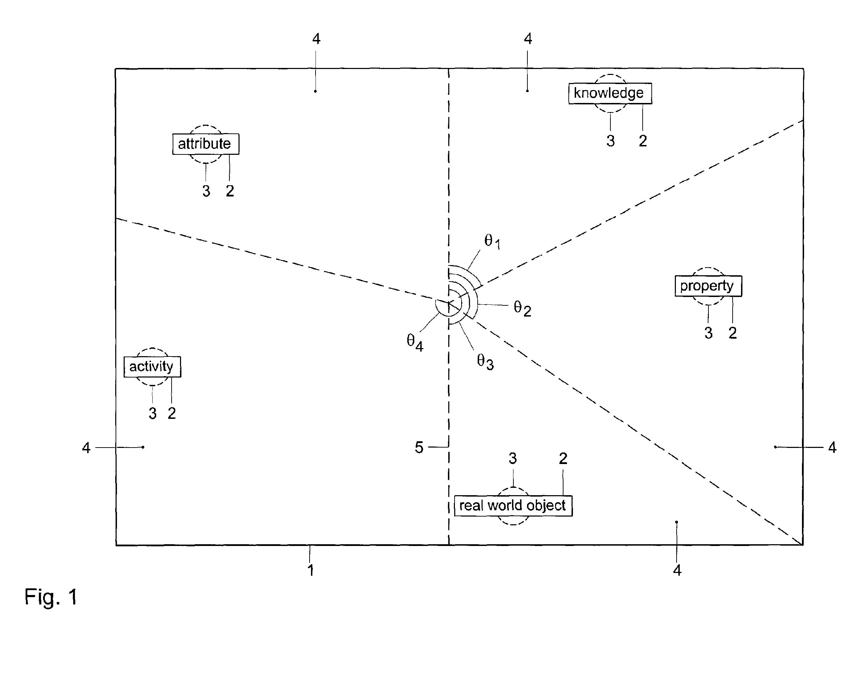

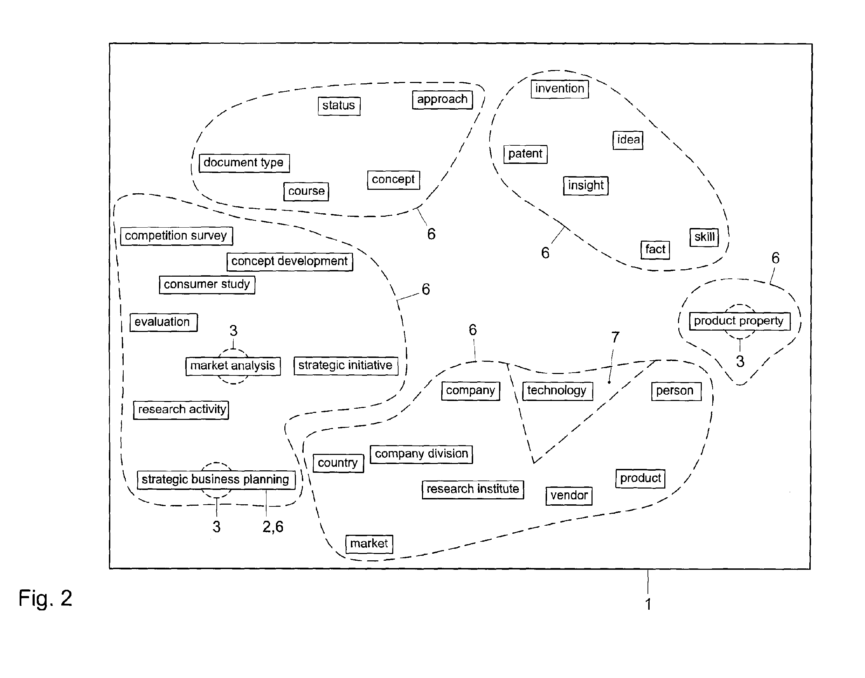

Figures 1 and 2 show embodiments of the present invention according to a first aspect. In particular, Figure 1 shows the position of attractors for top-level entity types and Figure 2 shows the approximate position of attractors for second-level entity types.
Figure 1 shows details of a visualisation graph 1 wherein a plurality of entities 2 are displayed. Associated with each entity is an attractor 3. The attractors do not appear on the graph to a user, but are schematically depicted as dotted circles 3 .

The entities 2 are typically modelled as a mass. There is a repulsive force between each pair of entities. The repulsive force may be inversely proportional to the distance or the square of the distance, or any other inverse relationship. The relations between entities (not shown in Figure 1) are modelled as springs, typically linear springs. The model provides damping to ensure that the system converges. When energy is put into the system, for example, when entities 2 are introduced into the graph or moved, the system is modelled to adopt the lowest energy level. For each entity or node (refer to Figure 3), the distance and repulsive force is calculated from other entities and nodes. The forces are added to obtain a force vector. The reaction of the system in terms of acceleration and deceleration is dependent on the force vector.
To facilitate orientation, certain kinds of entities 2 are arranged to appear in the same sector 4 of the graph 1. This is done by introducing invisible (that is not visible to a user of the graph) attractors 3 to the graph for each entity type. In the example, shown in Figure 1 the types are: "attribute", "knowledge", "property", "real world object" and "activity". These may be referred to as top-level entity types. The angle theta 1- theta 4 of each attractor 3 with respect to a reference may be set by customizing and is inherited by all subtypes (refer to Figure 2 which depicts subtypes 6, wherein subtypes are entities 2 which have a type falling within the scope of a top-level type. For example, in Figure 2 "strategic business planning" is a sub-type of "activity".

According to a first aspect of the present invention, a 360°-approach is proposed. The present invention according to this first aspect may be carried out according to one of at least two embodiments.
A first embodiment is based on a non-deterministic approach, using attractors and repulsive forces. A second, alternative embodiment, is based on a deterministic approach using a dynamic, but deterministic, subdivision of the screen and screen areas into sectors.
The first non-deterministic embodiment is now described:

It is seen in Figures 1 and 2 that within each sector 4, 7 the entities to be placed are arranged in Figure 1 in an ellipse, whereas in Figure 2, because there are more entities to be arranged, and thus force vectors are more complex, in each sector 4, the sub-type entities, rather than being arranged in an ellipse are arranged in a more nebulous arrangement. Further, because the force vectors are more complex in Figure 2, where a large number of entities are located in a relatively small area, the location of each entity does not correspond exactly to the location of its respective attractor, because the repulsive forces between entities also play a role in the location of the entity. Thus, Figure 2 shows the approximate location of the attractors 3 as dotted lines.
It will be understood that the negotiation of sector size determined in accordance with the number of entities and how they are to be distributed causes the graph to have a particular fuzziness. This represents an important attribute of the present invention, and is achieved by the provision of the attractors 3. In contrast, in conventional graphs if predetermined locations are allocated to entities, there is no flexibility in the system to expand or contract a sector beyond or within its boundary, respectively, should the need arise when entities are either added or taken away from the sector.

The second deterministic embodiment is now described.
The 360° principle may also be used to arrange nodes (refer to Figure 2) in a navigation graph without the use of repulsive forces (which is the case in some conventional visualisation graphs).

According to an embodiment of the present invention, the following steps are carried out: the display, which is typically a computer screen, is divided into sectors 4 assigned to the respective top-level entity types 2. The size of each sector depends on the number of entities or nodes it contains, including all visible subtypes 6. For example, if a larger number of entities are to be placed in a particular sector, that sector will become larger. It is noted that this embodiment is carried out without repulsion and attractors. Then the sectors are recursively divided into subtype sectors 7 and again, their relative size depends on the number of entities they contain. The segmentation of the screen is repeated each time that entities are added to or removed from the graph 1. The distance of the entities or nodes to the center of the graph is an oscillating function of the angle in order to avoid collisions (which in the simulative approach are avoided by the repulsive force between entities).

### 2. Grouping

Figure 3 shows a visualisation graph according to an embodiment of a second aspect of the present invention. In particular, Figure 3 shows a focus entity 10 with related entities 2 and those comprised in nodes 9, clustered by entity type. The dashed lines indicate indirectly related items, "competitors", "market", selected due to user preferences.
Figure 4 shows further details of the visualisation graph shown in Figure 3. In particular, Figure 4 depicts a display of a group's common relations as indicated when a mouse, or other indicator adapted for use with a computer, is passed over the desired node (MouseOver).
As shown in Figures 3 and 4, to avoid a visualisation graph 1 getting crowded and the data complex to navigate as a result, groups of entities 9 with common relations are bundled and displayed as group nodes 9 (Fig. 3). Of all possible groupings those are selected which result in the most even distribution of entities 2(also referred as elements) over the groups and which form groups of entities 2 (elements) which have at least two relations in common.

The common relations may be explicitly assigned to each entity in a group, but they may also be abstractions of the individual relations. This embodiment is shown in Fig. 4, where the common relations of the group " sanitary napkins" are displayed: each of these products has got a relation "refers to German market" and a relation "has property biodegradability". These are direct relations. For example, two products in the group are sold by the company having access to the graph, the remaining products are sold by competing companies. Since the ontology contains the information that all those are companies, a common abstract relation "is sold by some company" is created, which also characterizes the elements of the group.
The selection code is dynamic resulting in a dynamic grouping of the entities. That is, depending on certain criteria such as the context, the selection and abstraction, if applied, may at different times provide different groupings.

In a further embodiment, to further improve the predictability of the selection, facets are introduced. In particular, in order to increase the predictability with regard to what common relation will be chosen as criterion to form groups, the user may define facets for each entity type. Facets are predefined groups which are characterized by the entity type of their elements or the kind of relation which connects their elements to the focus entity.
In the example, the following facets have been defined for product properties:
knowledge, products, technologies, persons, life cycle phases, companies, ideas, insights, facts, concepts, approaches, activities

If facets are defined, all entities related to the focus entity will be sorted into the corresponding facets (groups) and the dynamic grouping algorithm is used only to subdivide these facets into smaller groups (if possible).

### 3. Exploding Groups

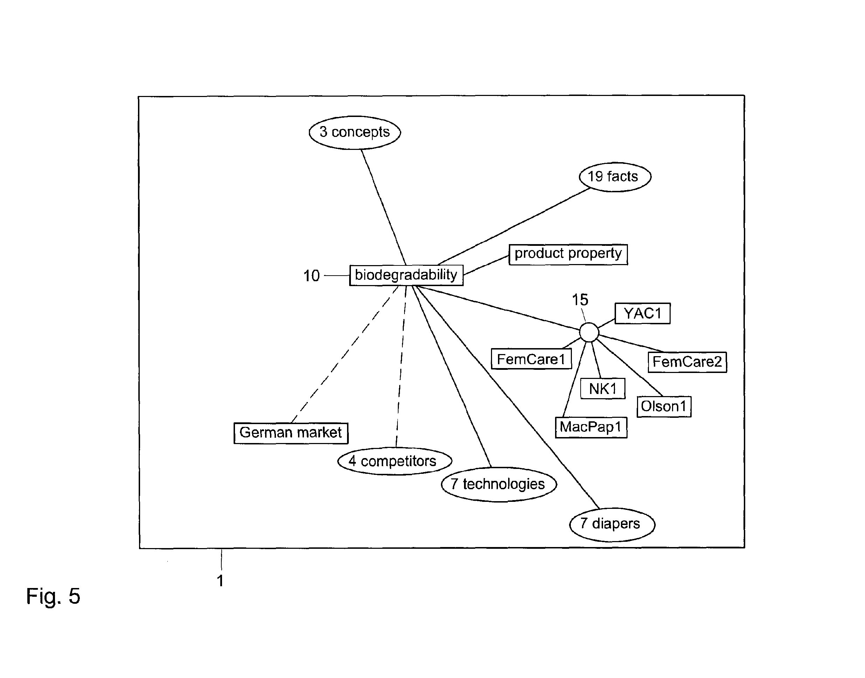

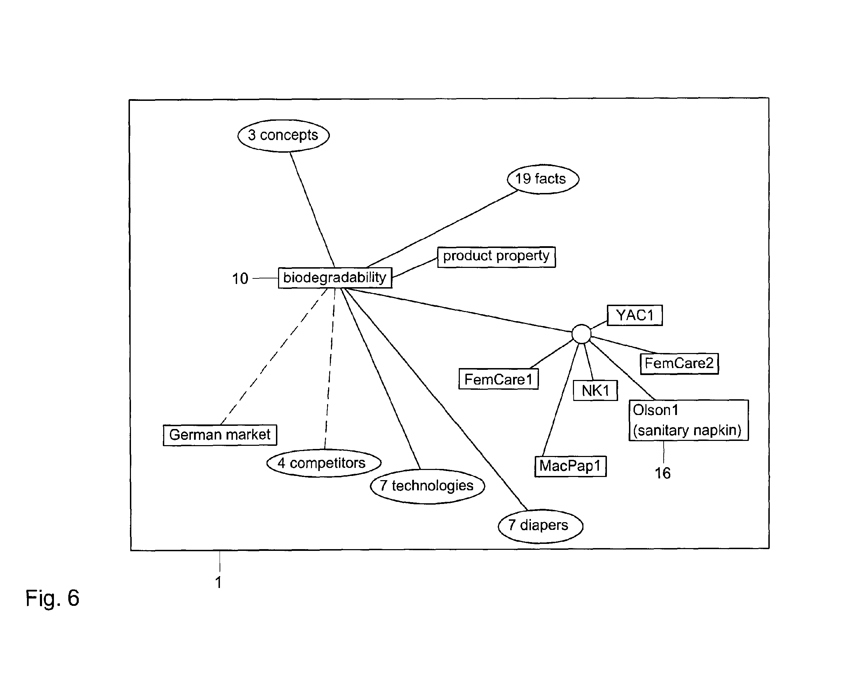

Figures 5-8 show visualisation graphs according to embodiments of a third aspect of the present invention. In particular, Figure 5 depicts an exploding group 15, wherein association of members to group remains visible. Figure 6 depicts a display of entity type 16 as viewed with the MouseOver function.

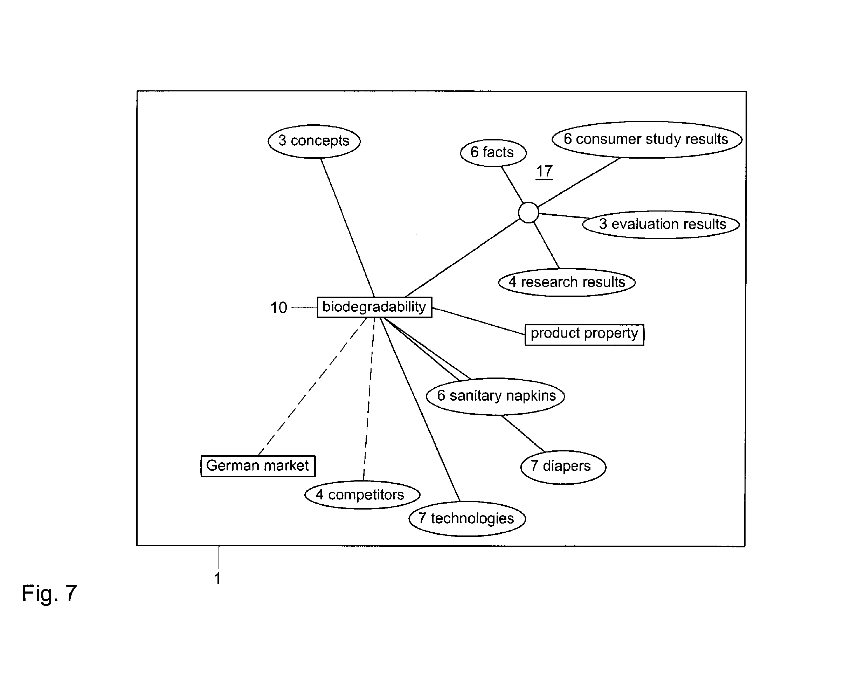

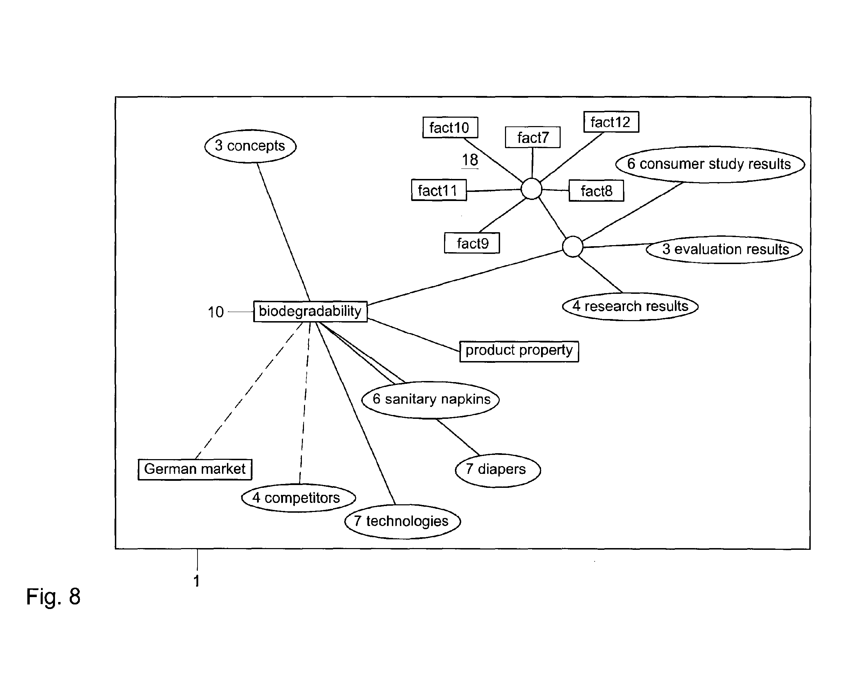

Figure 7 depicts an explosion of a group into subgroups 17. Figure 8 depicts the explosion of a subgroup 18.
As mentioned, in contrast to conventional visualisation graphs, an aspect of the present invention allows the formation of groups in a 2D visualisation graph whilst keeping it clear. According to an embodiment of the present invention this is achieved by keeping the space required for the nodes minimal and the origin of the added nodes traceable. Further, the graph is rearranged in a smooth way to avoid confusion of the user. According to an embodiment of the invention, the following steps are taken:
- before exploding, the group node increases repulsive force proportionally to the number of entities to be inserted in order to make room for the new nodes. The actual insertion begins, when the neighbour nodes have moved sufficiently far away.
- Although the new nodes inserted into to the graph have a direct relation to the "focus" node 10, this relation is only displayed indirectly: the new entities are connected to the group node which remains in the graph as "bundler" without label and establishes the relation to the "focus" node 10. Thus the number of lines connected to the center node 10 remains low.
- While a group "bundler" node 11 doesn't have a label in order to save space, the group's characteristics are shown when the user moves the mouse pointer over the "bundler" node 11, in the same way as shown in Fig. 4.
- Double-clicking a "bundler" node 11 causes group to collapse again into one node.
- The recursive explosion and collapsing of subgroups 18 is also possible (Fig. 7,8).

The resulting representation looks and behaves similar to a "tree view control". The main difference is that a tree view represents an existing hierarchical structure, whereas the group nodes in the graph dynamically create a hierarchy-like structure in order to get a clearer graph layout. Also the problem of finding a 2D graph layout does not exist for conventional tree view controls.

### 4. Indirect Relatedness

As mentioned, in contrast to conventional visualisation graphs, an aspect of the present invention the visualisation graph layout is such that the number of nodes is kept low without missing out potentially relevant information.

According to an embodiment of the present invention this is achieved in the following way: when the focus of a graph changes, new related entities are inserted, and therefore other entities have to be removed. In conventional visualisation graphs, only nodes in the graph are kept which have a distance d<dₘₐₓ from the focus node, where the distance is the number of relations on the shortest path between a node and the focus node. Since the number of nodes usually increases exponentially with dₘₐₓ, a value of 1 or 2 is appropriate for most purposes.
In order to enhance navigation of the visualisation graph, entities of certain types may be included in the graph even if they are far more distant to the focus, if they are considered to be of special interest in the current context either due to their entity type or due to the kind of relations linking them to the focus node.
The context in this case can be made up, but is not limited, from the following components:
- Current user's general preferences,
- Context information attached to the "focus" node, and
- Current user's current role and/or session history.

In Figures 3 to 8, the entity 2 "German market" and a group of "four competitors" 12 appear in the graph connected with dashed lines to the focus node 10. These entities 12 have no direct relation to the product property "biodegradability", but are related via some products. In this case, the system has been told that if an entity of the type "product property" is in the focus, markets and competitors are of special interest. So all markets and competitors in a certain distance d <4 to the entity "biodegradability" are selected and inserted into the graph.
More sophisticated algorithms may be applied to find entities of special interest and it is even possible to let the user create context specific algorithms by means of a scripting language or macro recorder.

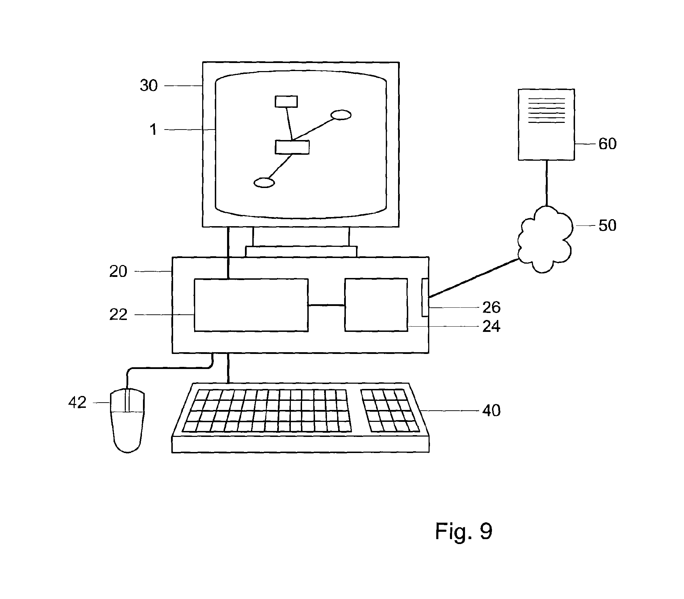

Figure 9 shows a typical computer arrangement for carrying out the methods according to embodiments of the invention. In particular, Figure 5 shows a computer 20 including a central processing unit (CPU) 22. Also provided is a display device, such as a screen, for displaying a visualisation graph 1.
The user may use a keyboard 40, mouse 42 or other operating device to communicate with the computer 20 and to instruct the computer to perform a query. In one embodiment, the database 24 in which data for building the graph may store data locally at the computer 20. Alternatively or in addition, the database 60 or an additional database may be located remotely from the computer 20. In such an embodiment, the computer is provided with means to remotely access a remote database. For example, using a modem 26 connected via the internet 50 or other network or communications link to the remote database 60. Although the embodiment shown in Figure 9 is a typical internet configuration, other configurations may also be possible. As mentioned, a stand-alone configuration is also envisaged. Further, the database may be distributed over more than one computer. Whilst parts of the processing may be performed on the user's computer, other parts of the processing may be performed remotely at a remote computer.

In the embodiments of the present invention described above, the visualisation graph is concerned with aspects of company dealing with personal hygiene products. However, the invention is not limited in this respect. The present invention finds application in any sphere where data is to be navigated. In particular, where complex interrelationships of data are to be navigated. Further applications are found where data in one or more databases is somehow related to one another. Further applications include internet applications, where metadata is accessed and used.
The expression "visualisation graph" is intended to cover visual representations, such as navigation graphs and other such tools.

Whilst specific embodiments of the invention have been described above, it will be appreciated that the invention may be practiced otherwise than as described. The description is not intended to limit the invention.

## Claims

1. A method of providing a visualisation graph on a computer comprising the steps of:
storing data corresponding to a plurality of entities having a particular type, wherein an ontology includes said entities and
wherein said entities are linked to each other by a plurality of relations,
in response to a query with respect to an entity selected from said plurality of entities, providing a visualisation graph representing the results of said query,
**characterised by**:
providing attractors which attract said entities to a predetermined sector of the graph depending on their entity type.

2. A method of providing a visualisation graph on a computer comprising the steps of:
storing data corresponding to a plurality of entities, wherein an ontology includes said entities and wherein said entities are linked to each other by a plurality of relations,
in response to a query with respect to an entity selected from said plurality of entities, providing a visualisation graph representing the results of said query,
**characterised by**:
selecting those entities from said plurality of entities having at least one common relation and storing said selected entities as a plurality of groups, representing said groups on said graph as a plurality of nodes, and representing only those relations which all of said nodes have in common.

3. A method according to claim 2, wherein said selecting step includes abstracting said relations to find said common relation.

4. A method of providing a visualisation graph on a computer comprising the steps of:
storing data corresponding to a plurality of entities, wherein an ontology includes said entities and wherein said entities are linked to each other by a plurality of relations,
in response to a query with respect to an entity selected from said plurality of entities, providing a visualisation graph representing the results of said query,
**characterised by**:
representing a plurality of entities having a common relation as a first node on said visualisation graph, and in response to a predetermined stimulus causing said entities comprised at said first node to be displayed, and in response to a further predetermined stimulus causing said graph to restructure so that said entities displayed are replaced by said node.

5. A method according to claim 4, wherein, in response to said first predetermined stimulus, said node remains in said graph to represent said common relation.

6. A method according to either of claims 4 or 5, wherein said entities are linked to a further entity or node via a link which represents a relation which may not be common to all entities linked to said first node.

7. A method of providing a visualisation graph on a computer comprising the steps of:
storing data corresponding to a plurality of entities, wherein an ontology includes said entities and wherein said entities are linked to each other by a plurality of relations,
in response to a query representing a predetermined context corresponding to an entity selected from said plurality of entities, providing a visualisation graph representing the results of said query, wherein the focus of said graph represents said context;
**characterised by**:
displaying entities which are indirectly related to said focus based on said context and at least one predetermined user preference.

8. A computer for providing a visualisation graph, said computer comprising:
a database for storing data corresponding to a plurality of entities having a particular type, wherein an ontology includes said entities and wherein said entities are linked to each other by a plurality of relations,
a query interface adapted, so that in response to a query with respect to an entity selected from said plurality of entities, a visualisation graph is provided representing the results of said query,
**characterised by**:
a plurality of attractor codes processable to attract said entities to a predetermined sector of the graph depending on their entity type.

9. A computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query with respect to an entity selected from said plurality of entities, a visualisation graph is provided representing the results of said query,
**characterised by**:
selection code processable to select those entities from said plurality of entities having a common relation and storing said selected entities as a plurality of groups,
representation code processable to represent said groups on said graph as a plurality of nodes, wherein only those relations which all of said nodes have in common are represented.

10. A computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query with respect to an entity selected from said plurality of entities, a visualisation graph is provided representing the results of said query,
**characterised by**:
representation code processable to represent a plurality of entities having a common relation as a node on said visualisation graph, and
in response to a predetermined stimulus causing said entities comprised at said node to be displayed, and in response to a further predetermined stimulus causing said graph to restructure so that said entities displayed are replaced by said node.

11. A computer for providing a visualisation graph, said computer comprising:
a database for storing data corresponding to a plurality of entities, wherein an ontology includes said entities and wherein said entities are linked to each other by a plurality of relations,
a query interface adapted, so that in response to a query representing a predetermined context corresponding to an entity selected from said plurality of entities, a visualisation graph is provided representing the results of said query, wherein the focus of said graph represents said context;
**characterised by**:
display code processable to display entities which are indirectly related to said focus based on said context and at least one predetermined user preference.

12. A program storage device readable by a processing apparatus, said device embodying a program of instructions executable by the processor to perform the steps of any one of claims 1-5.
